Europäisches Patentamt

European Patent Office

Office européen des brevets

(11) Numéro de publication: **0 385 821**
**A1**

## (12) DEMANDE DE BREVET EUROPEEN

(21) Numéro de dépôt: **90400265.6**

(22) Date de dépôt: **01.02.90**

(51) Int. Cl.5: **B62J 39/00**

(30) Priorité: **23.02.89 FR 8902614**

(43) Date de publication de la demande:
**05.09.90 Bulletin 90/36**

(84) Etats contractants désignés:
**AT BE CH DE DK ES FR GB GR IT LI LU NL SE**

(71) Demandeur: **M B K INDUSTRIE Société
Nouvelle MOTOBECANE Société Anonyme
française
Zone Industrielle de Rouvroy
F-02100 Saint Quentin(FR)**

(72) Inventeur: **Rakover, Jean-Jacques
3, rue A. Mathias
F-02100 Morcourt(FR)**

(74) Mandataire: **Maureau, Pierre et al
Cabinet GERMAIN & MAUREAU, 64, rue
d'Amsterdam
F-75009 Paris(FR)**

(54) **Dispositif de protection pour freins de cycles, notamment cycles de cross et de montagne.**

(57) Ce dispositif consiste en une coque rigide qui possède un profil général de fer à cheval, est fixée par sa partie centrale sur une zone fixe (10) du cycle au-dessus de la roue considérée (6) et en arrière du frein (8), et enveloppe par son bord intérieur (1) le profil du pneu, de telle sorte que ce bord (1) joue le rôle de racleur écartant la boue hors du pneu et l'empêchant ainsi d'atteindre le frein.

FIG_2

EP 0 385 821 A1

## Dispositif de protection pour freins de cycles, notamment cycles de cross et de montagne

Sur les cycles de cross et sur ceux de montagne, généralement appelés "Mountain-bike", les freins avant et arrière sont très souvent victimes de telles projections de boues que leur fonctionnement devient aléatoire par manque de liberté de leurs branches articulées porteuses des patins de freinage. Ces cycles sont certes pour la plupart démunis de garde-boues de protection des roues; mais en aucun cas les garde-boues habituels n'exclueraient à plus ou moins long terme le rassemblement des boues sur les freins, car les boues pénètrent d'autant plus facilement sous les garde-boues qu'elles trouvent des zones d'ancrage entre les crampons des pneus de ce type de cycles.

L'invention remédie à ces inconvénients et risques de mauvais fonctionnement des freins, en proposant un dispositif de protection consistant en une coque rigide qui possède un profil général de fer à cheval, est fixée, par sa partie centrale, sur une zone fixe du cycle, au-dessus de la roue considérée et en arrière du frein et enveloppe, par son bord intérieur, le profil du pneu, de telle sorte que ce bord joue le rôle de racleur écartant la boue hors du pneu et l'empêchant ainsi d'atteindre le frein.

Suivant une autre caractéristique, cette coque présente, en outre, une forme concave vers l'avant et à la fois convexe et concave vers l'arrière pour faciliter le dégagement des boues lorsqu'elles ont été raclées hors du pneu.

Divers modes de fixation de ce dispositif de protection peuvent être envisagés. C'est ainsi que, suivant une forme avantageuse de réalisation, la coque présente, dans sa partie supérieure centrale, un simple trou pour le passage d'une vis de fixation. Dans le cas du frein avant cette vis est celle utilisée pour la fixation du frein sur la tête de fourche. Dans le cas du frein arrière, cette vis traverse l'entretoise des haubans de la fourche, et est celle utilisée pour la fixation de ce frein.

Dans tous les cas, la coque se trouve fixée en appui contre la face arrière des haubans de la fourche concernée.

Le dessin schématique annexé représente, à titre d'exemple non limitatif, une forme d'exécution de ce dispositif de protection :

Figure 1 en est une vue en perspective;

Figures 2 et 3 illustrent ce dispositif en position de protection respectivement du frein avant et du frein arrière d'un cycle.

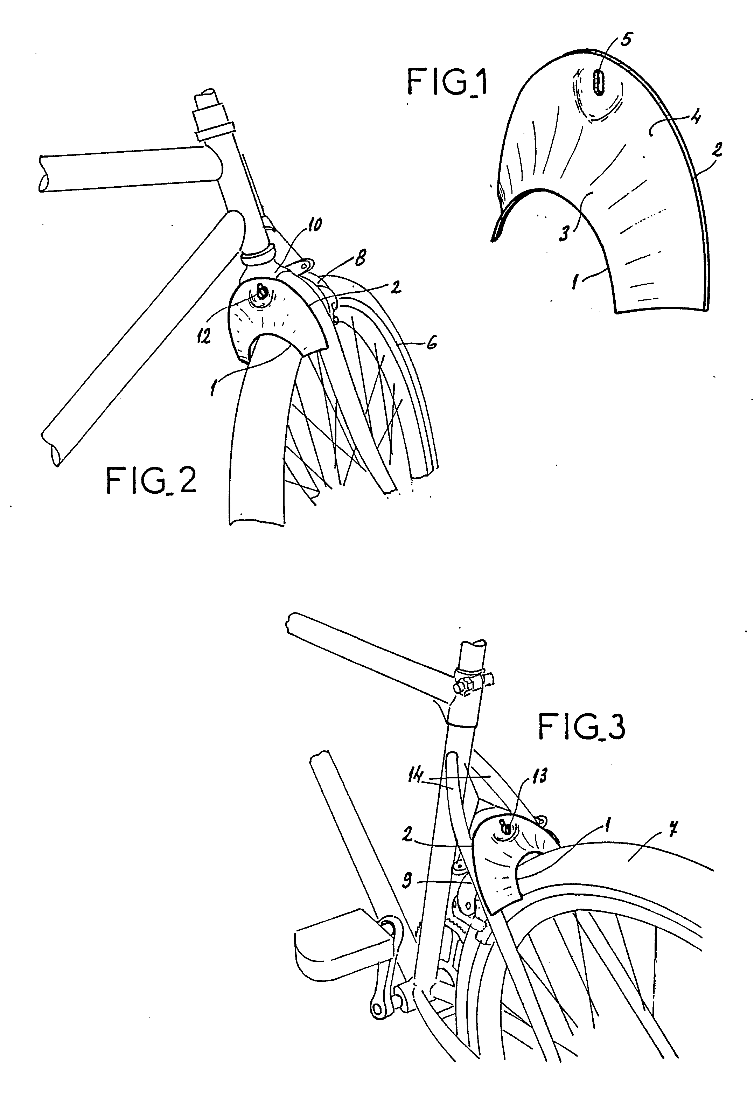

Comme le montre la figure 1, ce dispositif se présente sous l'aspect d'une coque profilée de façon telle que :

- elle possède une forme générale de fer à cheval ayant un bord intérieur 1 et un bord extérieur 2 curvilignes,

- le bord intérieur 1 présente approximativement une forme d'arc de cercle de 180° se prolongeant vers le bas par deux courtes zones rectilignes,

- le bord extérieur 2 délimite un oval se prolongeant aussi vers le bas par deux courtes zones rectilignes,

- le bord intérieur 1 et le bord extérieur 2 sont placés dans les plans parallèles décalés, et ils sont raccordés par une paroi courbe et profilée dans la zone principale 3 et plane dans sa zone supérieure 4,

- un orifice 5 est prévu dans cette zone plane 4.

Cette coque est dimensionnée et profilée pour envelopper l'un ou l'autre des deux pneus 6,7 du cycle en arrière des freins correspondants 8,9.

Pour la protection des freins avant, la coque est fixée sur la tête de fourche 10 par la vis 12 servant à la fixation du frein avant 8. Pour la protection du frein arrière, la coque est fixée par une vis 13 sur l'entretoise des haubans 14 de la fourche arrière, cette vis 13 servant aussi à la fixation du frein arrière.

Dans tous les cas la coque se trouve en appui par les parties inférieures de son bord extérieur 2 contre les haubans de chacune des deux fourches, alors que par son bord intérieur 1 elle enveloppe au plus près chacun des deux pneus 6,7. Il en résulte que, si les pneus sont plus ou moins enveloppés de boues, le bord intérieur 1 se comporte comme un organe racleur qui écarte les boues hors du pneu et les projette à l'extérieur. Cette projection extérieure est facilitée par la forme profilée de la coque. à savoir forme complexe, à la fois concave et convexe.

L'invention ne se limite pas bien entendu à la seule forme d'exécution de ce dispositif de protection qui a été ci-dessus décrite à titre d'exemple; elle en embrasse, au contraire toutes les variantes de réalisation, quels que soient notamment son ou ses moyens de fixation sur le cycle, son matériau constitutif et son procédé de fabrication.

## Revendications

1. Dispositif de protection pour freins de cycles, notamment cycles de cross et de montagne, caractérisé en ce qu'il consiste en une coque rigide qui possède un profil général de fer à cheval, est fixée par sa partie centrale sur une zone fixe (10,14) du cycle au-dessus de la roue considérée (6,7) et en arrière du frein (8,9), et enveloppe, par son bord intérieur (1), le profil du pneu, de telle sorte que ce bord (1) joue le rôle de racleur écartant la boue hors du pneu et l'empêchant ainsi d'atteindre le frein.

2. Dispositif de protection selon la revendication 1, caractérisé en ce qu'il présente une forme concave vers l'avant et à la fois convexe et concave vers l'arrière pour faciliter le dégagement des boues lorsqu'elles ont été raclées hors du pneu.

3. Dispositif de protection selon les revendications 1 et 2, caractérisé en ce que la coque présente, dans sa partie supérieure centrale, un simple trou (5) pour le passage d'une vis de fixation (12,13).

4. Dispositif de protection selon la revendication 3, caractérisé en ce que dans le cas du frein avant (8), cette vis (12) est celle utilisée pour la fixation du frein sur la tête de fourche (10).

5. Dispositif de protection selon la revendication 3, caractérisé en ce que dans le cas du frein arrière (9), cette vis (13) traverse l'entretoise des haubans (14) de la fourche et est celle utilisée pour la fixation de ce frein.

6. Dispositif de protection selon l'une quelconque des revendications 1 à 5, caractérisé en ce que la coque est fixée en appui contre la face arrière des haubans de la fourche concernée.

EP 0 385 821 A1

FIG_1

FIG_2

FIG_3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| Y | CH-A-95782 (WEINGARTNER)<br>* page 1; figures 1, 2 *<br>--- | 1 | B62J39/00 |
| Y | FR-A-2612481 (ALCAINA)<br>* page 1-3; figures 1-4 *<br>--- | 1 | |
| A | FR-A-2559446 (JACQUEMOND)<br>* page 2, ligne 22 – page 4, ligne 10; figures 1-5 *<br>----- | 1 | |

**DOMAINES TECHNIQUES RECHERCHES (Int. Cl.5 )**

B62J

Le présent rapport a été établi pour toutes les revendications

| Lieu de la recherche | Date d'achèvement de la recherche | Examinateur |
|---|---|---|
| LA HAYE | 28 MAI 1990 | VANNESTE M. A. R. |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
...........................................................................
& : membre de la même famille, document correspondant

EPO FORM 1503 03.82 (P0402)